# EUROPEAN PATENT APPLICATION

(11) **EP 3 885 407 A1**
(43) Date of publication of application: **29.09.2021**
(21) Application number: 19888128.6
(22) Date of filing: 18.11.2019
(51) Int. Cl.: C08L 27/18, C08L 67/04, C08G 63/06

(54) **AROMATIC POLYESTER, PRODUCTION METHOD THEREFOR, AND COMPOSITION**

(30) Priority: 20.11.2018 JP 2018217581
(71) Applicant: SUMITOMO CHEMICAL COMPANY LIMITED, Chuo-ku Tokyo 104-8260 (JP)
(72) Inventor: OHTOMO, Shinji, Tsukuba-shi, Ibaraki 300-3294 (JP)
(74) Representative: Vossius & Partner Patentanwälte Rechtsanwälte mbB
(86) International application number: PCT/JP2019/045016
(87) International publication number: WO 2020/105574

(57) **Abstract**

An aromatic polyester having a repeating unit represented by formula (1) shown below and a terminal structural unit represented by formula (1e) shown below, wherein the proportion of the terminal structural unit per unit mass of the aromatic polyester is not more than 50 µmol/g.

-O-Ar¹-CO- ... (1)

-O-Ar¹-CO-OH ... (1e)

(In the formulas, Ar¹ represents a 1,4-phenylene group, a 2,6-naphthylene group or a 4,4'-biphenylylene group. The hydrogen atoms that exist in the groups represented by Ar¹ may each be independently substituted with a halogen atom, an alkyl group or an aryl group.)

## Description

### TECHNICAL FIELD

The present invention relates to an aromatic polyester and a production method therefor, and a composition containing the aromatic polyester.

Priority is claimed on Japanese Patent Application No. 2018-217581, filed November 20, 2018, the content of which is incorporated herein by reference.

### BACKGROUND ART

Aromatic polyesters produced from raw material monomers such as 4-hydroxybenzoic acid and 2-hydroxy-6-naphthoic acid are known as polymers that exhibit superior heat resistance and chemical resistance, and have a property of being insoluble and infusible.

Conventionally, aromatic polyesters are produced by subjecting raw material monomers corresponding with the repeating units that constitute the aromatic polyester to melt polymerization, and then subjecting the thus obtained polymerization product (prepolymer) to solid-phase polymerization.

For example, Patent Document 1 discloses a method for producing an aromatic polyester by using para-hydroxybenzoic acid or the like as the starting raw material, polymerizing the starting raw material in a system containing no solvent, subjecting the obtained polymer to a heat treatment in the solid phase, and then mechanically grinding the heat-treated product.

### CITATION LIST

### PATENT DOCUMENTS

Patent Document 1: JP S60-25046-B

### SUMMARY OF THE INVENTION

### PROBLEMS TO BE SOLVED BY THE INVENTION

Polytetrafluoroethylene (hereinafter sometimes abbreviated as PTFE) is used as a resin that is chemically stable and exhibits excellent heat resistance and chemical resistance. PTFE is a substance that has a small coefficient of friction, but is inferior in terms of wear properties.

In addition to favorable heat resistance and chemical resistance, aromatic polyesters also exhibit excellent wear resistance. Further, aromatic polyesters also have excellent sliding characteristics, and are unlikely to damage the opposing material when used as an organic filler. Accordingly, there are also demands for the use of aromatic polyesters as modifiers for PTFE.

When used as a PTFE modifier, processing is conducted under reasonably high-temperature conditions, for example, by firing a mixture of the PTFE and the aromatic polyester at 370°C or the like. Consequently, the modifier requires thermal stability. Accordingly, aromatic polyesters that exhibit superior thermal stability to conventional levels are now being sought.

The present invention has been developed in light of the above circumstances, and has the objects of providing an aromatic polyester having enhanced thermal stability, a production method therefor, and a composition containing such an aromatic polyester.

### MEANS TO SOLVE THE PROBLEMS

As a result of intensive investigation, the inventors of the present invention discovered that by conducting the melt polymerization of para-acetoxybenzoic acid in refluxing acetic anhydride, the molecular weight of the aromatic polyester could be increased and the thermal stability could be enhanced, thus enabling them to complete the present invention.

In order to achieve the above objects, the present invention adopts the following aspects.

One aspect of the present invention is an aromatic polyester having a repeating unit represented by formula (1) shown below and a terminal structural unit represented by formula (1e) shown below, wherein the proportion of the terminal structural unit per unit mass of the aromatic polyester is not more than 50 µmol/g.

-O-Ar¹-CO- ... (1)

-O-Ar¹-CO-OH ... (1e)

(In the formulas, Ar¹ represents a 1,4-phenylene group, a 2,6-naphthylene group or a 4,4'-biphenylylene group.)

In one aspect of the present invention, the aromatic polyester is preferably a compound in which Ar¹ in the formula (1) and the formula (1e) is a 1,4-phenylene group.

Further, one aspect of the present invention is a composition containing the aromatic polyester described above and polytetrafluoroethylene.

Further, one aspect of the present invention is a method for producing an aromatic polyester that includes a step (P1) of obtaining a lump-like material of an aromatic polyester by conducting a melt polymerization of a compound (1a) represented by formula (1a) shown below in the presence of a carboxylic acid anhydride, a step (P2) of grinding the lump-like material to obtain a ground material, and a step (P3) of subjecting the ground material to a solid phase polymerization under temperature conditions exceeding 320°C.

R⁰CO-O-Ar¹-CO-OH ... (1a)

(In the formula, R⁰CO represents an acyl group, and Ar¹ represents a 1,4-phenylene group, a 2,6-naphthylene group or a 4,4'-biphenylylene group.)

In one aspect of the present invention, the production method may have, at a stage prior to the step (P1), a step (P0) of reacting a compound (1h) represented by formula (1h) shown below and a carboxylic acid anhydride to obtain the compound (1a), wherein the compound (1a) obtained in the step (P0) is used in the step (P1).

H-O-Ar¹-CO-OH ... (1h)

(In the formula, Ar¹ represents a 1,4-phenylene group, a 2,6-naphthylene group or a 4,4'-biphenylylene group.)

In one aspect of the present invention, the production method may be a method in which the reaction between the compound (1h) and the carboxylic acid anhydride in the above step (P0) is conducted under conditions in which the molar ratio represented by carboxylic acid anhydride / compound (1h) exceeds 1.

In one aspect of the present invention, the production method may be a method in which the reaction liquid of the compound (1h) and the carboxylic acid anhydride obtained following the reaction under conditions in which the above molar ratio exceeds 1 is used to conduct the melt polymerization in the step (P1).

In one aspect of the present invention, the production method may be a method in which the above molar ratio is at least 1.05 but not more than 1.10.

In other words, the present invention includes the following aspects.
[1] An aromatic polyester having a repeating unit represented by formula (1) shown below and a terminal structural unit represented by formula (1e) shown below, wherein
   the proportion of the terminal structural unit per unit mass of the aromatic polyester is not more than 50 µmol/g.

   -O-Ar¹-CO- ... (1)

   -O-Ar¹-CO-OH ... (1e)

   (In the formulas, Ar¹ represents a 1,4-phenylene group, a 2,6-naphthylene group or a 4,4'-biphenylylene group. The hydrogen atoms that exist in the groups represented by Ar¹ may each be independently substituted with a halogen atom, an alkyl group or an aryl group.)
[2] The aromatic polyester according to [1], wherein Ar¹ in the formula (1) and the formula (1e) is a 1,4-phenylene group.
[3] A composition containing the aromatic polyester described above and a polytetrafluoroethylene.
[4] A method for producing an aromatic polyester comprising:
   a step (P1) of obtaining a lump-like material of an aromatic polyester by conducting a melt polymerization of a compound (1a) represented by formula (1a) shown below in the presence of a carboxylic acid anhydride,
   a step (P2) of grinding the lump-like material to obtain a ground material, and
   a step (P3) of subjecting the ground material to a solid phase polymerization under temperature conditions exceeding 320°C.

      R⁰CO-O-Ar¹-CO-OH ... (1a)

      (In the formula, R⁰CO represents an acyl group. Ar¹ represents a 1,4-phenylene group, a 2,6-naphthylene group or a 4,4'-biphenylylene group. The hydrogen atoms that exist in the group represented by Ar¹ may each be independently substituted with a halogen atom, an alkyl group or an aryl group.)
[5] The method for producing an aromatic polyester according to [4],
   having, at a stage prior to the step (P1), a step (P0) of reacting a compound (1h) represented by formula (1h) shown below and a carboxylic acid anhydride to obtain the compound (1a), wherein the compound (1a) obtained in the step (P0) is used in the step (P1).

   H-O-Ar¹-CO-OH ... (1h)

   (In the formula, Ar¹ represents a 1,4-phenylene group, a 2,6-naphthylene group or a 4,4'-biphenylylene group. The hydrogen atoms that exist in the group represented by Ar¹ may each be independently substituted with a halogen atom, an alkyl group or an aryl group.)
[6] The method for producing an aromatic polyester according to [5], wherein
   the reaction between the compound (1h) and the carboxylic acid anhydride in the step (P0) is conducted under conditions in which the molar ratio represented by carboxylic acid anhydride / compound (1h) exceeds 1.
[7] The method for producing an aromatic polyester according to [6], wherein
   the reaction liquid obtained following the reaction of the compound (1h) and the carboxylic acid anhydride under conditions in which the molar ratio exceeds 1 is used to conduct the melt polymerization in the step (P1).
[8] The method for producing an aromatic polyester according to [6] or [7], wherein the molar ratio is at least 1.05 but not more than 1.10.

### EFFECTS OF THE INVENTION

Aspects of the present invention are able to provide an aromatic polyester having enhanced thermal stability, a production method therefor, and a composition containing the aromatic polyester.

### EMBODIMENTS FOR CARRYING OUT THE INVENTION

### (Aromatic Polyester)

An aromatic polyester of an embodiment of the present invention has a repeating unit represented by formula (1) shown below, and a terminal structural unit represented by formula (1e) shown below. In addition, the proportion of the terminal structural unit per unit mass of the aromatic polyester is not more than 50 µmol/g.

-O-Ar¹-CO- ... (1)

-O-Ar¹-CO-OH ... (1e)

(In the formulas, Ar¹ represents a 1,4-phenylene group, a 2,6-naphthylene group or a 4,4'-biphenylylene group. The hydrogen atoms that exist in the group represented by Ar¹ may each be independently substituted with a halogen atom, an alkyl group or an aryl group.)

### <Repeating Unit Represented by Formula (1)>

The aromatic polyester of the present embodiment has a repeating unit represented by formula (1) shown below (hereinafter referred to as "the repeating unit (1)").

-O-Ar¹-CO- ... (1)

From the viewpoint of polymerization reactivity, Ar¹ in formula (1) is preferably a 1,4-phenylene group or a 2,6-naphthylene group, and is more preferably a 1,4-phenylene group.

The aromatic polyester of the present embodiment may also contain small amounts of repeating units other than the structural unit (1) and structures derived from impurities and the like contained in the raw material monomers.

In the present embodiment, the proportion of the structural unit (1), relative to the total (total number of moles) of all the repeating units that constitute the aromatic polyester, is typically at least 90 mol% but not more than 100 mol%. The aromatic polyester of the present embodiment preferably has the repeating unit (1) in a proportion of at least 95 mol% but not more than 100 mol%, and more preferably at least 98 mol% but not more than 100 mol%, relative to the total of all the repeating units that constitute the aromatic polyester.

### <Terminal Structural Unit Represented by Formula (1e)>

Furthermore, the aromatic polyester of the present embodiment has a terminal structural unit represented by formula (1e) shown below. The proportion of the terminal structural unit per unit mass of the aromatic polyester is not more than 50 µmol/g. This enables the thermal stability of the aromatic polyester of the present embodiment to be further enhanced.

-O-Ar¹-CO-OH ... (1e)

In formula (1e), Ar¹ is as defined above for Ar¹ in formula (1).

In the present invention, the proportion (µmοl/g) of the terminal structural unit represented by formula (1e) per unit mass of the aromatic polyester employs the value measured by liquid chromatography (detection wavelength: 240 nm) using the method described below in the section entitled [Quantification of Terminal Carboxyl Groups].

In the aromatic polyester of the present embodiment, the proportion of the terminal structural unit represented by the above formula (1e) per unit mass of the aromatic polyester is not more than 50 µmol/g, and is preferably not more than 40 µmol/g, more preferably not more than 30 µmol/g, even more preferably not more than 25 µmol/g, and particularly preferably 25 µmol/g or less. An aromatic polyester for which the proportion of the terminal structural unit falls within this type of range exhibits improved thermal stability, and the amount of impurities can also be reduced. Further, by ensuring that the proportion of the terminal structural unit represented by the above formula (1e) is preferably not more than 40 µmol/g, the amount of black spot foreign matter generated when the aromatic polyester powder is exposed to a high-temperature atmosphere can be better reduced, meaning external appearance flaws can be further reduced.

The proportion of the terminal structural unit represented by formula (1e) is preferably as low as possible, although the lower limit for the proportion of the terminal structural unit per unit mass of the aromatic polyester is preferably at least 5 µmol/g.

In one aspect, the proportion of the terminal structural unit represented by formula (1e) per unit mass of the aromatic polyester is at least 5 µmol/g but not more than 50 µmol/g, and is preferably at least 5 µmol/g but not more than 40 µmol/g, more preferably at least 5 µmol/g but not more than 30 µmol/g, even more preferably at least 5 µmol/g but not more than 25 µmol/g, and particularly preferably at least 5 µmol/g but not more than 20 µmol/g.

In other aspects, the proportion may be at least 5 µmol/g but not more than 49 µmοl/g, at least 5 µmol/g but not more than 38 µmol/g, at least 15 µmol/g but not more than 49 µmol/g, or at least 15 µmol/g but not more than 38 µmοl/g.

The proportion of the terminal structural unit represented by formula (1e) in the aromatic polyester can be controlled, for example, by the production conditions for the aromatic polyester.

Examples of these production conditions for the aromatic polyester include the mixing ratio between the aromatic carboxylic acid and the carboxylic acid anhydride that represent the raw material monomers, and the temperature conditions for the solid-phase polymerization.

### <Other Repeating Units>

The aromatic polyester of the present embodiment may also contain at least one repeating unit selected from the group consisting of repeating units represented by formula (2) shown below (hereinafter referred to as "the repeating unit (2)") and repeating units represented by formula (3) shown below (hereinafter referred to as "the repeating unit (3)"), provided the inclusion of these repeating units does not impair the effects of the present invention.

-CO-Ar²-CO- ... (2)

-O-Ar³-O- ... (3)

(In the formulas, Ar² and Ar³ each independently represent a phenylene group, naphthylene group, biphenylene group, or a group represented by formula (4) shown below. The hydrogen atoms that exist in the groups represented by Ar² and Ar³ may each be independently substituted with a halogen atom, an alkyl group or an aryl group.)

-Ar⁴-Z-Ar⁵- ... (4)

(In the formula, Ar⁴ and Ar⁵ each independently represent a phenylene group or a naphthylene group. Z represents an oxygen atom, a sulfur atom, a carbonyl group, a sulfonyl group or an alkylidene group. The hydrogen atoms that exist in the groups represented by Ar⁴ and Ar³ may each be independently substituted with a halogen atom, an alkyl group or an aryl group.)

Examples of the halogen atom mentioned above include a fluorine atom, chlorine atom, bromine atom and iodine atom.

The alkyl group mentioned above is preferably an alkyl group of 1 to 10 carbon atoms, and examples include a methyl group, ethyl group, n-propyl group, isopropyl group, n-butyl group, isobutyl group, s-butyl group, t-butyl group, n-hexyl group, 2-ethylhexyl group, n-octyl group and n-decyl group.

The aryl group mentioned above is preferably an aryl group of 6 to 20 carbon atoms, and examples include a phenyl group, o-tolyl group, m-tolyl group, p-tolyl group, 1-naphthyl group and 2-naphthyl group.

In those cases where at least one hydrogen atom that exists in the group represented by Ar² and Ar³ is substituted with one of these groups, the number of substituents in each group represented by Ar² or Ar³ is, independently, typically not more than 2, and is preferably 1.

The alkylidene group in the above formula (4) is preferably an alkylidene group of 1 to 10 carbon atoms, and examples include a methylene group, ethylidene group, isopropylidene group, n-butylidene group and 2-ethylhexylidene group.

The repeating unit (2) is a repeating unit derived from a prescribed aromatic dicarboxylic acid. The repeating unit (2) is preferably a repeating unit in which Ar² is a p-phenylene group (for example, a repeating unit derived from terephthalic acid), a repeating unit in which Ar² is a m-phenylene group (for example, a repeating unit derived from isophthalic acid), a repeating unit in which Ar² is a 2,6-naphthylene group (for example, a repeating unit derived from 2,6-naphthalenedicarboxylic acid), or a repeating unit in which Ar² is a diphenyl ether-4,4'-diyl group (for example, a repeating unit derived from diphenyl ether-4,4'-dicarboxylic acid).

The repeating unit (3) is a repeating unit derived from a prescribed aromatic diol. The repeating unit (3) is preferably a repeating unit in which Ar³ is a p-phenylene group (for example, a repeating unit derived from hydroquinone), or a repeating unit in which Ar³ is a 4,4'-biphenylylene group (for example, a repeating unit derived from 4,4'-dihydroxybiphenyl).

The proportion of at least one of the repeating unit (2) and the repeating unit (3) in the aromatic polyester of the present embodiment, relative to the total (the total number of moles) of all the repeating units that constitute the aromatic polyester, is typically at least 0 mol% but less than 10 mol%, preferably at least 0 mol% but not more than 5 mol%, and more preferably at least 0 mol% but not more than 2 mol%.

In this description, the expression "derived from" means the raw material monomer undergoes a change in the chemical structure due to polymerization, with no other structural change occurring.

In terms of handling properties, and enhancing the uniformity when mixing with a polytetrafluoroethylene (PTFE), the aromatic polyester of the present embodiment is preferably in a powdered form.

In one aspect, the aromatic polyester of the present embodiment is a powder (hereinafter sometimes referred to as an aromatic polyester powder), and the powder preferably has a proportion of particles with a particle size of at least 5 µm but not more than 90 µm that represents at least 50% by volume of all of the particles (namely, at least 50% by volume relative to the total volume of all the particles that constitute the powder). This improves the handling properties of the powder when used as an organic filler. For example, this type of aromatic polyester powder can be mixed more easily with polytetrafluoroethylene (PTFE).

In the aromatic polyester powder, the proportion of particles with a particle size of at least 5 µm but not more than 90 µm is preferably at least 60% by volume of all of the particles, and more preferably at least 70% by volume of all of the particles. On the other hand, in the aromatic polyester powder, the proportion of particles with a particle size of at least 5 µm but not more than 90 µm is preferably not more than 99.9% by volume of all of the particles, and more preferably not more than 99.5% by volume of all of the particles.

In one aspect, the aromatic polyester powder contains a proportion of particles with a particle size of at least 5 µm but not more than 90 µm that is preferably at least 50% by volume but not more than 99.9% by volume of all of the particles, more preferably at least 60% by volume but not more than 99.9% by volume of all of the particles, and even more preferably at least 70% by volume but not more than 99.5% by volume of all of the particles.

The volume average particle size of the aromatic polyester powder is preferably at least 8 µm, and more preferably 12 µm or greater. On the other hand, the volume average particle size of the aromatic polyester powder is preferably not more than 40 µm, and more preferably 30 µm or less.

In one aspect, the volume average particle size of the aromatic polyester powder is preferably at least 8 µm but not more than 40 µm, and more preferably at least 12 µm but not more than 30 µm.

For the aromatic polyester powder, the particle size, the proportion of particles having a particle size of not more than 90 µm, and the volume average particle size can be measured by a laser diffraction/scattering method.

The aromatic polyester powder preferably has a bulk specific gravity of at least 0.2 but not more than 0.7.

This improves the processability, for example by facilitating compression molding.

The bulk specific gravity of the aromatic polyester powder is more preferably at least 0.30, even more preferably at least 0.35, and particularly preferably 0.39 or greater. On the other hand, the bulk specific gravity of the aromatic polyester powder is preferably not more than 0.6, more preferably not more than 0.5, and even more preferably 0.45 or less.

The upper limit and lower limit described above may be combined as desired. For example, the bulk specific gravity of the aromatic polyester powder is preferably at least 0.30 but not more than 0.6, more preferably at least 0.35 but not more than 0.5, even more preferably at least 0.35 but not more than 0.45, and particularly preferably at least 0.39 but not more than 0.45. In another aspect, the aromatic polyester powder may have a bulk specific gravity of at least 0.39 but not more than 0.42.

The bulk specific gravity of the aromatic polyester powder can be measured using the method prescribed in the JIS standards (JIS K6720).

The aromatic polyester of the present embodiment described above has the repeating unit (1) and the terminal structural unit (-O-Ar¹-CO-OH) containing a terminal carboxyl group (-CO-OH), has a low proportion of the terminal structural unit per unit mass of the aromatic polyester that is not more than 50 µmol/g, and is able to be formed with a large molecular weight. Accordingly, the present embodiment is able to provide an aromatic polyester having enhanced thermal stability.

In one aspect, the aromatic polyester of the present embodiment exhibits a weight loss on heating, when heated in an air atmosphere at 370°C for 5 hours, that is preferably at least 0.50% but less than 1.80%, more preferably at least 1.00 % but less than 1.80%, and even more preferably at least 1.10% but less than 1.72%.

The weight loss on heating can be determined using the method described below in the section entitled [Thermal Stability Evaluation (1): Weight Loss on Heating].

In another aspect, the aromatic polyester of the present embodiment preferably exhibits no more than 5 black spot foreign matter defects when heated in an air atmosphere at 370°C for 5 hours.

Evaluation of the black spot foreign matter can be conducted using the method described below in the section entitled [Thermal Stability Evaluation (2): Black Spot Foreign Matter].

### (Composition)

A composition of an embodiment of the present invention is a composition (hereinafter sometimes referred to as "the PTFE composition") containing the aromatic polyester described above and a polytetrafluoroethylene (PTFE).

The aromatic polyester described above can be used favorably as a modifier for the PTFE.

For example, by mixing the aromatic polyester powder described above and a PTFE powder in a mass ratio (aromatic polyester : PTFE) within a range from 3:97 to 40:60, molding the mixture into a desired shape, and then conducting firing at a temperature of at least 330°C but not more than 390°C, a PTFE composition molded article can be obtained.

In one aspect, the amount of the aromatic polyester powder described above, relative to the total mass of the PTFE composition, is preferably within a range from 5 to 25% by mass.

This PTFE composition exhibits excellent wear resistance and sliding properties, and can be used in various applications, including as a sliding material for a jet engine seal, an oil seal or a bearing.

The PTFE composition may also optionally contain other components, in addition to the aromatic polyester and PTFE described above, provided these other components do not impair the effects of the present invention. Examples of other components that may be added include fibrous, plate-like or granular fillers or stabilizers, ultraviolet absorbers, lubricants such as stearic acid or montanoic acid, and resins other than liquid crystal polyester resins.

The amount of these other components, relative to the total mass of the PTFE composition, is preferably within a range from 0.01 to 20% by mass.

The total of the amounts of the aromatic polyester, the PTFE and the other components, relative to the total mass of the PTFE composition, does not exceed 100% by mass.

One aspect of the present invention is the use of the aromatic polyester described above to modify a polytetrafluoroethylene.

Another aspect is the use of the aromatic polyester described above for producing a modifier for a polytetrafluoroethylene.

Yet another aspect is a modification method for a polytetrafluoroethylene that uses the aromatic polyester, the method including: producing the aromatic polyester using step (P1) described below, step (P2) described below and step (P3) described below, and mixing the produced aromatic polyester and the polytetrafluoroethylene in a mass ratio (aromatic polyester : PTFE) within a range from 3:97 to 40:60.

### (Method for Producing Aromatic Polyester)

The method for producing an aromatic polyester that represents one aspect of the present invention includes a step (P1) of obtaining a lump-like material of an aromatic polyester by conducting a melt polymerization of a compound (1a) represented by formula (1a) shown below in the presence of a carboxylic acid anhydride, a step (P2) of grinding the lump-like material to obtain a ground material, and a step (P3) of subjecting the ground material to a solid phase polymerization under temperature conditions exceeding 320°C.

A "lump-like material" means that the produced aromatic polyester has solidified in an irregular manner to generate large lumps of 2 to 3 mm.

ROCO-O-Ar¹-CO-OH ... (1a)

(In the formula, R⁰CO represents an acyl group. Ar¹ represents a 1,4-phenylene group, a 2,6-naphthylene group or a 4,4'-biphenylylene group.)

### - Compound (1a) Represented by Formula (1a)

In the above formula (1a), R⁰ is preferably an alkyl group, more preferably an alkyl group of 1 to 5 carbon atoms, even more preferably a methyl group, ethyl group, n-propyl group or isopropyl group, and among these, for reasons of superior reactivity, a methyl group is particularly preferred.

In formula (1a), Ar¹ is the same as Ar¹ in the above formula (1), and is preferably a 1,4-phenylene group or a 2,6-naphthylene group, and more preferably a 1,4-phenylene group.

Among the various possibilities for the compound (1a), in terms of offering comparatively high reactivity, 4-acetoxybenzoic acid is particularly preferred.

### - Carboxylic Acid Anhydride

Examples of the carboxylic acid anhydride include acetic anhydride, propionic anhydride, oxalic anhydride, succinic anhydride, maleic anhydride, phthalic anhydride and benzoic anhydride, and among these, for reasons of superior reactivity, acetic anhydride is preferred.

### <First Embodiment>

The method for producing an aromatic polyester according to a first embodiment (a method for producing a powdered aromatic polyester) has the step (P1), the step (P2) and the step (P3) described above in that order. The aromatic polyester described above that represents one embodiment of the present invention can be produced using this method for producing an aromatic polyester of the first embodiment.

### [Step (P1)]

In the step (P1), the melt polymerization of the compound (1a) is conducted in the presence of a carboxylic acid anhydride to obtain a lump-like material of the aromatic polyester.

The melt polymerization in the step (P1) may be conducted, for example, by polymerizing the compound (1a) that represents the starting material in the refluxing carboxylic acid anhydride while applying a high shearing force. During this process, it is preferable that the polymerization proceeds in a state where the carboxylic acid anhydride is always present, while free carboxylic acid (R⁰CO-OH) is discharged from the system.

A reaction formula describing the case where the polymerization is conducted using 4-acetoxybenzoic acid as the compound (1a) and acetic anhydride as the carboxylic acid anhydride is shown below.

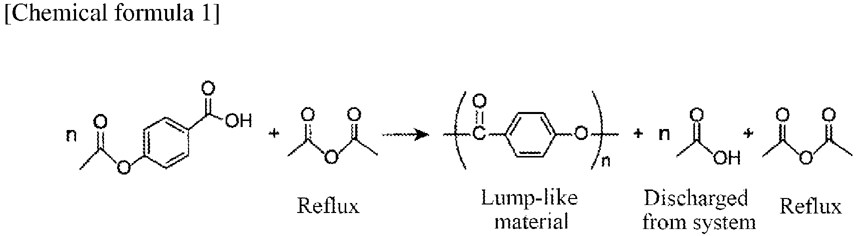

The amount used of the carboxylic acid anhydride, per 1 mol of the compound (1a), is preferably at least 0.05 mol, and more preferably from 0.05 to 0.10 mol, of the carboxylic acid anhydride. Provided the amount used of the carboxylic acid anhydride is at least as large as the lower limit of this preferred range, the polymerization proceeds favorably, whereas provided the amount used is not more than the upper limit of this preferred range, coloration is suppressed.

The temperature conditions for the melt polymerization are preferably within a range from 250 to 370°C, and more preferably from 270 to 330°C.

The polymerization system in the step (P1) changes from a melted state to a solid state as the polymerization progresses. The point where a predetermined stirring force is reached is deemed the end point of the step (P1), and in this manner, a lump-like material of the aromatic polyester is obtained.

### [Step (P2)]

In the step (P2), the lump-like material of the aromatic polyester obtained in the above step (P1) is ground to obtain a ground material (a powder of the aromatic polyester).

The grinding of the lump-like product of the aromatic polyester can be conducted using an impact compression grinder such as a hammer mill, pin mill or ball mill, a compression grinder such as a roll crusher or disk crusher, a friction grinder such as a ring roller mill, a vibrating grinder such as a vibrating mill, or a grinder such as a jet mill or colloid mill.

In the step (P2), the lump-like material of the aromatic polyester is ground so that the proportion of the particles having a particle size of not more than 90 µm in the finally obtained powder of the aromatic polyester, relative to the total volume of all of the particles that constitute the powder, is at least 50% by volume. When grinding the lump-like material, the rotational speed of the grinder described above, the grinding time, and the supply rate of the lump-like material and the like are preferably adjusted as appropriate.

### [Step (P3)]

In the step (P3), the ground material obtained in the above step (P2) is subjected to a solid phase polymerization under temperature conditions exceeding 320°C, thus obtaining a powdered aromatic polyester.

The solid phase polymerization in the step (P3) is conducted, for example, under an inert gas atmosphere or an air atmosphere.

The temperature conditions for the solid phase polymerization exceeds 320°C, and are preferably at least 360°C but not more than 420°C, more preferably at least 370°C but not more than 410°C, and particularly preferably within a range from 380 to 400°C. In another aspect, the temperature may be within a range from 380 to 390°C.

Provided the temperature conditions for the solid phase polymerization are at least as high as the above lower limit, an aromatic polyester having enhanced thermal stability is obtained. Provided the temperature conditions for the solid phase polymerization are not higher than the upper limit of the above preferred range, the polymerization proceeds satisfactorily.

The time of the solid phase polymerization is preferably from 3 to 10 hours.

In the step (P3), it is thought that the volume average particle size of the powder undergoes no substantial change from that observed following the step (P2).

The expression that "the volume average particle size of the powder undergoes no substantial change" means that no change in the volume average particle size of the powder occurs that is sufficient to affect the physical properties of the powder.

By using the method for producing an aromatic polyester according to the first embodiment described above, an aromatic polyester having further enhanced thermal stability can be produced using an acylated aromatic carboxylic acid (the compound (1a)) as a starting material.

### <Second Embodiment>

The method for producing an aromatic polyester according to a second embodiment (a production method for a powdered aromatic polyester) has a step (P0), at a stage prior to the above step (P1), of reacting a compound (1h) represented by formula (1h) shown below and a carboxylic acid anhydride to obtain the compound (1a), wherein the compound (1a) obtained in the step (P0) is used in the step (P1).

The aromatic polyester described above that represents one embodiment of the present invention can be produced using this method for producing an aromatic polyester of the second embodiment.

H-O-Ar¹-CO-OH ... (1h)

(In the formula, Ar¹ represents a 1,4-phenylene group, a 2,6-naphthylene group or a 4,4'-biphenylylene group.)

In other words, the method for producing an aromatic polyester of the second embodiment has the step (P0), the step (P1), the step (P2) and the step (P3) described above in that order.

The same carboxylic acid anhydrides as those described above may be used as the carboxylic acid anhydride.

### - Compound (1h) Represented by Formula (1h)

The compound (1h) is 4-hydroxybenzoic acid, 2-hydroxy-6-naphthoic acid or 4-hydroxy-4'-carboxybiphenyl.

Among the various compounds for the compound (1h), in terms of offering comparatively high reactivity, 4-hydroxybenzoic acid or 2-hydroxy-6-naphthoic acid is preferred, and 4-acetoxybenzoic acid is more preferred.

### [Step (P0)]

In the step (P0), the compound (1h) and a carboxylic acid anhydride are reacted (an acylation) to obtain the compound (1a). This yields the compound (1a) with a bonded acyl group that exhibits high transesterification reactivity.

The reaction (acylation) in the step (P0) is conducted with the compound (1h) that represents the starting material monomer and the carboxylic acid anhydride blended not in an equimolar ratio, but rather blended so that the proportion of the carboxylic acid anhydride represents an excess (namely, conditions in which the molar ratio represented by carboxylic acid anhydride / compound (1h) exceeds 1).

A reaction formula describing the case in which the reaction (acylation) is conducted using 4-hydroxybenzoic acid as the compound (1h) and acetic anhydride as the carboxylic acid anhydride is shown below. The labels α, β and γ indicate the molar ratio relationship, wherein γ = α+β.

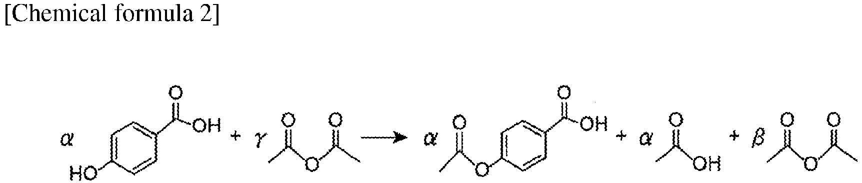

In the step (P0), the reaction between the compound (1h) and the carboxylic acid anhydride is conducted under conditions in which the molar ratio represented by carboxylic acid anhydride / compound (1h) exceeds 1. In the above reaction (acylation) between 4-hydroxybenzoic acid and acetic anhydride, the reaction is conducted under conditions in which the molar ratio (γ/α)>1.

The molar ratio represented by carboxylic acid anhydride / compound (1h) exceeds 1, is preferably at least 1.05 but not more than 1.10, and may be at least 1.05 but not more than 1.09. By conducting the reaction with the molar ratio within this range, some residual carboxylic acid anhydride can be left in the subsequent step (P1), and the resulting reaction liquid containing the compound (1h) and the carboxylic acid anhydride may be used, as is, to conduct the melt polymerization in a stable manner.

The temperature conditions for the reaction (acylation) in the step (P0) are preferably within a range from 130 to 150°C, and more preferably from 135 to 145°C.

The reaction time for the step (P0) is preferably within a range from 1 to 6 hours, and more preferably from 2 to 5 hours.

### [Step (P1) to Step (P3)]

In the step (P1) in the second embodiment, a melt polymerization is conducted using the reaction liquid containing the compound (1h) and the carboxylic acid anhydride obtained following the reaction of the step (P0) under conditions in which the molar ratio exceeded 1, thus obtaining a lump-like material of the aromatic polyester. With the exception of this operation, the step (P1) is conducted in a similar manner to the step (P1) in the first embodiment.

Further, the step (P2) in the second embodiment, and the subsequent step (P3), are also conducted in a similar manner to the step (P2) and the step (P3) respectively of the first embodiment.

By using the method for producing an aromatic polyester according to the second embodiment described above, an aromatic polyester having further enhanced thermal stability can be produced using 4-hydroxybenzoic acid, 2-hydroxy-6-naphthoic acid or 4-hydroxy-4'-carboxybiphenyl as a starting material.

### <Other Embodiments>

In the production method of the second embodiment described above, in the step (P1), the reaction liquid obtained following the step (P0) containing the compound (1h) and the carboxylic acid anhydride was used, as is, for conducting the melt polymerization, but the invention is not limited to this method, and another method may be used.

For example, an embodiment may be employed in which the reaction (acylation) in the step (P0) is conducted by blending the compound (1h) and the carboxylic acid anhydride in an equimolar ratio, and then in the step (P1), only the compound (1a) obtained from the acylation is used, with additional carboxylic acid anhydride being added to conduct the melt polymerization.

However, the production method of the second embodiment described above is preferred in terms of not requiring the addition of fresh carboxylic acid anhydride in the step (P1), meaning the step (P0) and the step (P1) can be conducted continuously, and in terms of accelerating the reaction in the step (P0).

The production methods of the first and second embodiments described above may each include other additional steps. For example, in each of the production methods of the first and second embodiments, a classification step for obtaining a desired particle size may be provided following the step (P3). The classification method is preferably a dry classification, and classification methods that use a vibrating screen or air classification methods using a cyclone or the like may be used.

In each of the production methods of the first and second embodiments described above, a monomer that is copolymerizable with the compound (1a) may also be used in the step (P1), provided this does not impair the effects of the present invention. Examples of the copolymerizable monomer include aromatic dicarboxylic acids, aromatic diols, and esters of an aromatic dicarboxylic acid and an aromatic diol.

However, in the step (P1) of embodiments of the present invention, the use of only a single compound (1a) as the raw material monomer is preferred, as this facilitates the obtaining of an aromatic polyester having excellent heat resistance and wear resistance.

In one aspect, the aromatic polyester of an embodiment of the present invention
is an aromatic polyester having a repeating unit represented by formula (1) shown above and a terminal structural unit represented by formula (1e) shown above, wherein Ar¹ in formula (1) and formula (1e) is a 1,4-phenylene group,
the proportion of the terminal structural unit per unit mass of the aromatic polyester is at least 5 µmol/g but not more than 50 µmol/g (and may be at least 15 µmol/g but not more than 49 µmol/g, or at least 15 µmol/g but not more than 38 µmol/g),
the aromatic polyester is a powder,
   the proportion of particles having a particle size of at least 5 µm but not more than 90 µm in the powder, relative to the total volume of all the particles that constitute the powder, is at least 50% by volume but not more than 99.9% by volume (and is preferably at least 60% by volume but not more than 99.9% by volume, and more preferably at least 70% by volume but not more than 99.5% by volume), and
the bulk specific gravity of the powder is at least 0.30 but not more than 0.6 (and is preferably at least 0.35 but not more than 0.5, more preferably at least 0.35 but not more than 0.45, even more preferably at least 0.39 but not more than 0.45, and particularly preferably at least 0.39 but not more than 0.42).

Moreover, the aromatic polyester exhibits a weight loss on heating, when heated in an air atmosphere at 370°C for 5 hours, that is preferably at least 0.50% but less than 1.80%, more preferably at least 1.00 % but less than 1.80%, and even more preferably at least 1.10% but less than 1.72%, and
preferably exhibits no more than 5 black spot foreign matter defects when heated in an air atmosphere at 370°C for 5 hours.

In one aspect, the aromatic polyester production method of an embodiment of the present invention includes
a step (P0) of reacting a compound (1h) represented by formula (1h) shown above (and preferably 4-acetoxybenzoic acid) and a carboxylic acid anhydride (and preferably acetic anhydride) under conditions in which the molar ratio represented by carboxylic acid anhydride / compound (1h) exceeds 1 (and is preferably at least 1.05 but not more than 1.0, and more preferably at least 1.05 but not more than 1.09), thus obtaining the compound (1a) described above,
a step (P1) of obtaining a lump-like material of an aromatic polyester by conducting a melt polymerization of the compound (1a) using the reaction liquid of the compound (1h) and the carboxylic acid anhydride obtained following the reaction in the step (P0),
a step (P2) of grinding the lump-like material to obtain a ground material,
a step (P3) of subjecting the ground material to a solid phase polymerization under temperature conditions exceeding 320°C, and
if desired, a classification step.

Moreover, the temperature conditions for the reaction in the step (P0) are preferably within a range from 130 to 150°C, and more preferably from 135 to 145°C, and
the time of the reaction in the step (P0) is preferably within a range from 1 to 6 hours, and more preferably from 2 to 5 hours.

In addition, the temperature conditions for the melt polymerization in the step (P1) are preferably within a range from 250 to 370°C, and more preferably from 270 to 330°C.

Moreover, the grinding in the step (P2) preferably involves grinding of the lump-like material so that the proportion of particles having a particle size of not more than 90 µm, relative to the total volume of all of the particles that constitute the ground material, is at least 50% by volume but not more than 99.9% by volume (and preferably at least 60% by volume but not more than 99.9% by volume, and more preferably at least 70% by volume but not more than 99.5% by volume).

In addition, the temperature conditions for the melt polymerization in the step (P3) exceed 320°C, and are preferably at least 360°C but not more than 420°C, more preferably at least 370°C but not more than 410°C, even more preferably at least 380°C but not more than 400°C, and particularly preferably at least 380°C but not more than 390°C.

Moreover, the aromatic polyester in the production method described above
is an aromatic polyester having a repeating unit represented by formula (1) shown above and a terminal structural unit represented by formula (1e) shown above, wherein
Ar¹ in formula (1) and formula (1e) is a 1,4-phenylene group,
the proportion of the terminal structural unit per unit mass of the aromatic polyester is at least 5 µmol/g but not more than 50 µmol/g (and may be at least 15 µmol/g but not more than 49 µmol/g, or at least 15 µmol/g but not more than 38 µmol/g),
the aromatic polyester is a powder,
the proportion of particles having a particle size of at least 5 µm but not more than 90 µm in the powder, relative to the total volume of all the particles that constitute the powder, is at least 50% by volume but not more than 99.9% by volume (and is preferably at least 60% by volume but not more than 99.9% by volume, and more preferably at least 70% by volume but not more than 99.5% by volume), and
the bulk specific gravity of the powder is at least 0.30 but not more than 0.6 (and is preferably at least 0.35 but not more than 0.5, more preferably at least 0.35 but not more than 0.45, even more preferably at least 0.39 but not more than 0.45, and particularly preferably at least 0.39 but not more than 0.42).

One embodiment of the present invention is the use of an aromatic polyester to modify a polytetrafluoroethylene, wherein
the aromatic polyester has a repeating unit represented by formula (1) shown above and a terminal structural unit represented by formula (1e) shown above,
Ar¹ in formula (1) and formula (1e) is a 1,4-phenylene group,
the proportion of the terminal structural unit per unit mass of the aromatic polyester is at least 5 µmol/g but not more than 50 µmol/g (and may be at least 15 µmol/g but not more than 49 µmol/g, or at least 15 µmol/g but not more than 38 µmol/g),
the aromatic polyester is a powder,
the proportion of particles having a particle size of at least 5 µm but not more than 90 µm in the powder, relative to the total volume of all the particles that constitute the powder, is at least 50% by volume but not more than 99.9% by volume (and is preferably at least 60% by volume but not more than 99.9% by volume, and more preferably at least 70% by volume but not more than 99.5% by volume), and
the bulk specific gravity of the powder is at least 0.30 but not more than 0.6 (and is preferably at least 0.35 but not more than 0.5, more preferably at least 0.35 but not more than 0.45, even more preferably at least 0.39 but not more than 0.45, and particularly preferably at least 0.39 but not more than 0.42).

Moreover, the aromatic polyester exhibits a weight loss on heating, when heated in an air atmosphere at 370°C for 5 hours, that is preferably at least 0.50% but less than 1.80%, more preferably at least 1.00 % but less than 1.80%, and even more preferably at least 1.10% but less than 1.72%, and
preferably exhibits no more than 5 black spot foreign matter defects when heated in an air atmosphere at 370°C for 5 hours.

### EXAMPLES

The present invention is described below in further detail using a series of specific examples. However, the present invention is in no way limited by the following examples.

### [Quantification of Terminal Carboxyl Groups]

For the aromatic polyester produced in each example, the proportion of terminal structural units in which the aromatic polyester terminal was a carboxyl group (-CO-OH), per unit mass of the aromatic polyester, was quantified by liquid chromatography by the absolute calibration curve method using an internal standard. The measurement conditions are described below.

### Sample Preparation:

The aromatic polyester powder produced in each example was added to a roundbottom flask containing N-methylpyrrolidone and n-butylamine, a condenser was fitted to the flask, and the sample was dissolved by heating the flask in a 200°C sand bath, and then decomposed by heating at 200°C for a further two hours. Subsequently, excess n-butylamine was removed by an evaporator while heating in an 80°C sand bath, and formic acid was added to neutralize the solution, thus obtaining a sample solution containing added N-methylpyrrolidone and anisic acid as an internal standard.

When preparing the sample solution, the aromatic polyester formed from the repeating unit (1) described above reacts with the primary amine such as n-butylamine and decomposes. In this case, the ester linkage (-CO-O-) in the main chain of the aromatic polyester is cleaved, selectively forming a chain-derived compound (the -CO-side) in which bonding with the primary amine forms an amide linkage, and a terminal-derived compound (the -O- side) which forms a hydroxyl group. At this time, the primary amine does not react with carboxyl groups that exist at aromatic polyester terminals or on side chains.

The aromatic carboxylic acid formed by the hydroxyl group (HO-Ar¹-CO-OH) contained within the entire decomposition product of the aromatic polyester contains the terminal structural unit (-O-Ar¹-CO-OH) represented by the above formula (1e).

The case in which an aromatic polyester composed of a repeating unit (1) in which Ar¹ is a 1,4-phenylene group is decomposed by reaction with a primary amine (R¹-NH₂) is shown below as an example of the above reaction. In this case, the 4-hydroxybenzoic acid in the decomposition product contains the terminal structural unit (-O-C₆H₄-CO-OH) represented by formula (1e).

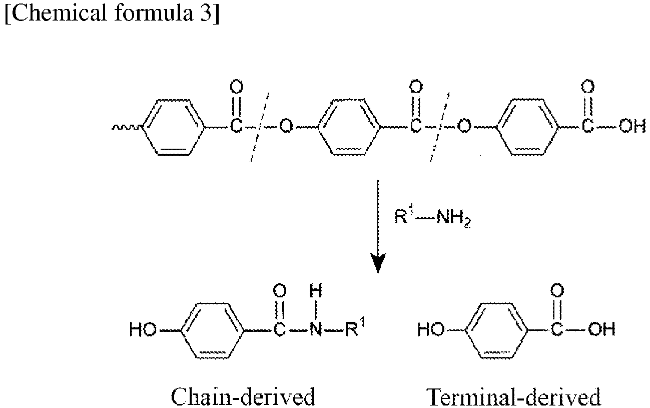

### Measurement:

The sample solution prepared in the manner described above was measured by a liquid chromatography method under the measurement conditions described below, and based on the ratio of the peak at a retention time in the vicinity of 4.5 minutes (the peak attributable to the terminal-derived carboxyl groups) relative to the peak at a retention time of 13.55 minutes (the anisic acid peak), and the ratio of the peak at a retention time in the vicinity of 14.4 minutes (the peak attributable to the chain-derived compound) relative to the peak at 13.55 minutes (the anisic acid peak), the component derived from the terminal carboxyl groups was quantified.

### [Liquid Chromatography Measurement Conditions]

Column: product name: sumipax-K ODS (4.6 mmø × 15 cm, 5 µm), manufactured by Sumika Chemical Analysis Service, Ltd.
Guard column: product name: sumipax filter PG-ODS, manufactured by Sumika Chemical Analysis Service, Ltd.
Mobile phase flow rate: 1.0 mL/min
Column temperature: 40°C
Sample injection volume: 10 µL
Detector: UV-Vis spectrophotometer (UV)
Detection wavelength: 240 nm
Analysis time: 25 min
Measurement interval: 15 min
Measurement method: gradient elution method
Mobile phase (eluent): using an aqueous solution containing 0.1% by volume of added acetic acid and an acetonitrile solution containing 0.1 % by volume of added acetic acid, the composition of the eluent was changed using the gradient conditions described below.

### Gradient conditions:

An eluent containing 10% by volume of the acetonitrile solution containing 0.1% by volume of added acetic acid and 90% by volume of the aqueous solution containing 0.1 % by volume of added acetic acid was prepared.

First, the proportion of the acetonitrile solution containing 0.1% by volume of added acetic acid, relative to the total volume of the eluent, was changed in a linear manner from 10% by volume to 25% by volume over a period of 15 minutes. Subsequently, the proportion of the acetonitrile solution containing 0.1% by volume of added acetic acid, relative to the total volume of the eluent, was changed in a linear manner from 25% by volume to 100% by volume over a period of 10 minutes.

### [Measurement of Particle Size]

The particle size of the aromatic polyester powder was measured in the manner described below, using a laser diffraction/scattering particle size distribution analyzer (LA-950 manufactured by Horiba, Ltd.).

First, approximately 100 mg of the aromatic polyester powder was dispersed in water to prepare a dispersion.

Next, a particle size distribution of the aromatic polyester powder in the thus obtained dispersion was obtained using the laser diffraction/scattering particle size distribution analyzer mentioned above. The proportion (% by volume) of particles having a particle size of not more than 90 µm was determined from the obtained particle size distribution for the aromatic polyester powder.

### [Measurement of Bulk Specific Gravity]

The bulk specific gravity of the aromatic polyester powder was measured in accordance with the JIS standard (JIS K6720) using a bulk specific gravity analyzer (manufactured by Tsutsui Scientific Instruments Co., Ltd.).

### <Production of Aromatic Polyesters>

### (Example 1)

Step (P0):
   The inside of a reactor fitted with a stirrer, a torque meter, a nitrogen gas inlet tube, a thermometer and a reflux condenser was flushed thoroughly with nitrogen gas, the reactor was then charged with 70 parts by mass of 4-hydroxybenzoic aid and 56.4 parts by mass of acetic anhydride (so that the molar ratio represented by acetic anhydride / 4-hydroxybenzoic acid was 1.09), and a reaction (acylation) was conducted by gradually raising the internal temperature to 140°C and then stirring for 3 hours.
Step (P1):
   The reaction liquid obtained following the above step (P0) was heated further to 280°C over a period of about 3.5 hours while stirring was continued. Subsequently, the reaction product was cooled, thus obtaining an aromatic polyester prepolymer (lump-like material of the aromatic polyester).
Step (P2):
   The prepolymer obtained in the above step (P1) was ground using a pulverizer to obtain a ground material of the aromatic polyester.
Step (P3):
   The ground material obtained in the above step (P2) was subjected to a solid phase polymerization by heating the material from room temperature to 380°C over a period of 9 hours in a nitrogen gas atmosphere, and then holding the temperature at 380°C for a further 5 hours.

In this description, room temperature means a temperature within a range from 5 to 35°C.

Subsequently, the product obtained following the above solid phase polymerization was cooled to room temperature to obtain a powdered aromatic polyester. The thus obtained powdered aromatic polyester was then sieved through a dry sieve with a mesh size of 100 µm to obtain the target aromatic polyester powder.

The thus obtained aromatic polyester powder had a proportion of particles with a particle size of not more than 90 µm of 99% by volume, and had a bulk specific gravity of 0.40.

### (Example 2)

In the step (P3) of Example 1, with the exception of performing an operation in which the temperature was raised from room temperature to 390°C over a period of 9 hours and then held at 390°C for a further 5 hours, an aromatic polyester powder was obtained in a similar manner to Example 1.

The thus obtained aromatic polyester powder had a proportion of particles with a particle size of not more than 90 µm of 99% by volume, and had a bulk specific gravity of 0.42.

### (Example 3)

In the step (P3) of Example 1, with the exception of performing an operation in which the temperature was raised from room temperature to 370°C over a period of 9 hours and then held at 370°C for a further 5 hours, an aromatic polyester powder was obtained in a similar manner to Example 1.

The thus obtained aromatic polyester powder had a proportion of particles with a particle size of not more than 90 µm of 99% by volume, and had a bulk specific gravity of 0.39.

### (Example 4)

In the step (P0) of Example 1, with the exception of altering the amount added of the acetic anhydride to 54.4 parts by mass (a molar ratio represented by acetic anhydride / 4-hydroxybenzoic acid of 1.05), an aromatic polyester powder was obtained in a similar manner to Example 1.

The thus obtained aromatic polyester powder had a proportion of particles with a particle size of not more than 90 µm of 99% by volume, and had a bulk specific gravity of 0.39.

### (Comparative Example 1)

In the step (P03) of Example 1, with the exception of performing an operation in which the temperature was raised from room temperature to 320°C over a period of 9 hours and then held at 320°C for a further 5 hours, an aromatic polyester powder was obtained in a similar manner to Example 1.

The thus obtained aromatic polyester powder had a proportion of particles with a particle size of not more than 90 µm of 99% by volume, and had a bulk specific gravity of 0.37.

### (Comparative Example 2)

In the step (P0) of Example 1, with the exception of altering the amount added of the acetic anhydride to 51.8parts by mass (a molar ratio represented by acetic anhydride / 4-hydroxybenzoic acid of 1.00), an aromatic polyester powder was obtained in a similar manner to Example 1.

The thus obtained aromatic polyester powder had a proportion of particles with a particle size of not more than 90 µm of 99% by volume, and had a bulk specific gravity of 0.38.

### <Evaluations>

The aromatic polyester powders produced using the production methods of the above examples were each evaluated for thermal stability using the methods described below.

### [Thermal Stability Evaluation (1): Weight Loss on Heating]

Ten grams of the aromatic polyester powder was heated in an air atmosphere in an oven at 370°C for 5 hours, the change in mass from before to after the heating was measured, and the percentage weight loss was determined. The result is shown in Table 1 as "Weight loss on heating (%)".

### [Thermal Stability Evaluation (2): Black Spot Foreign Matter]

Ten grams of the aromatic polyester powder was heated in an air atmosphere in an oven at 370°C for 5 hours. Subsequently, the heated particle groups were spread out thinly, and the surfaces of the various aromatic polyester particles were inspected visually. The number of black spot foreign matter defects having a size of 0.1 mm or greater was counted and evaluated against the following evaluation criteria. The results are shown in Table 1 as "Black spot foreign matter".

### Evaluation Criteria

A: number of black spot foreign matter defects was 1 or fewer.
B: number of black spot foreign matter defects was from 2 to 5.
C: number of black spot foreign matter defects was 6 or greater.

The black spot foreign matter observed in this evaluation represents carbides formed by the heating at 370°C for 5 hours.

**[Table 1]**

| | | Example 1 | Example 2 | Example 3 | Example 4 | Comparative Example 1 | Comparative Example 2 |
|---|---|---|---|---|---|---|---|
| Step (P0) | Molar ratio represented by acetic anhydride / 4-hydroxybenzoic acid | 1.09 | 1.09 | 1.09 | 1.05 | 1.09 | 1.00 |
| Step (P3) | Temperature conditions for solid phase polymerization (°C) | 380 | 390 | 370 | 380 | 320 | 380 |
| Quantification of terminal carboxyl groups | Proportion of terminal structural units in which terminal is -CO-OH (µmol/g) | 29 | 15 | 49 | 38 | 139 | 90 |
| Thermal stability evaluations | Weight loss on heating (%) | 1.30 | 1.10 | 1.72 | 1.50 | 1.90 | 1.80 |
| | Black spot foreign matter | A | A | B | A | C | C |

From the results shown in Table 1, it can be confirmed that aromatic polyesters of the present invention, for which the proportion of terminal structural units in which the terminal is a carboxyl group (-CO-OH) is not more than 50 µmol/g, have a smaller value for weight loss on heating and enhanced thermal stability compared with aromatic polyesters for which the above proportion exceeds 50 µmol/g.

In addition, it can also be confirmed that aromatic polyesters for which the proportion of terminal structural units in which the terminal is a carboxyl group is not 40 µmοl/g or less exhibit a small number of black spot foreign matter defects which occur when the powder is heated in a high-temperature atmosphere, and have further enhanced thermal stability and external appearance.

### <Preparation of Composition>

### (Example 5)

By mixing the aromatic polyester powder obtained in Example 1 and a PTFE powder in a mass ratio of 80:20, molding the mixture into a circular cylindrical shape using a compression molding die, conducting firing at a temperature of 370°C or higher, and then cutting the molded product into a sheet-like form, a molded item (composition) for use in oil sealing can be obtained.

### INDUSTRIAL APPLICABILITY

The aromatic polyester of the present invention exhibits enhanced thermal stability compared with conventional products. This aromatic polyester is useful as an organic filler, and is particularly useful as a modifier for polytetrafluoroethylene (PTFE). Use of the aromatic polyester in a variety of applications can be expected, including jet engine sealing materials, oil sealing, and bearings.

In other words, the present invention is able to provide an aromatic polyester having enhanced thermal stability, a production method therefor, and a composition containing the aromatic polyester, and is therefore extremely useful industrially.

## Claims

1. An aromatic polyester having a repeating unit represented by formula (1) shown below and a terminal structural unit represented by formula (1e) shown below, wherein
a proportion of the terminal structural unit per unit mass of the aromatic polyester is not more than 50 µmol/g,
-O-Ar¹-CO- ... (1)
-O-Ar¹-CO-OH ... (1e)
wherein Ar¹ represents a 1,4-phenylene group, a 2,6-naphthylene group or a 4,4'-biphenylylene group, and hydrogen atoms that exist in the groups represented by Ar¹ may each be independently substituted with a halogen atom, an alkyl group or an aryl group.

2. The aromatic polyester according to Claim 1, wherein Ar¹ in the formula (1) and the formula (1e) is a 1,4-phenylene group.

3. A composition comprising the aromatic polyester according to Claim 1 or 2, and a polytetrafluoroethylene.

4. A method for producing an aromatic polyester comprising:
a step (P1) of obtaining a lump-like material of an aromatic polyester by conducting a melt polymerization of a compound (1a) represented by formula (1a) shown below in presence of a carboxylic acid anhydride,
a step (P2) of grinding the lump-like material to obtain a ground material, and
a step (P3) of subjecting the ground material to a solid phase polymerization under temperature conditions exceeding 320°C,
R⁰CO-O-Ar¹-CO-OH ... (1a)
wherein R⁰CO represents an acyl group, Ar¹ represents a 1,4-phenylene group, a 2,6-naphthylene group or a 4,4'-biphenylylene group, and hydrogen atoms that exist in the group represented by Ar¹ may each be independently substituted with a halogen atom, an alkyl group or an aryl group.

5. The method for producing an aromatic polyester according to Claim 4,
having, at a stage prior to the step (P1), a step (P0) of reacting a compound (1h) represented by formula (1h) shown below and a carboxylic acid anhydride to obtain the compound (1a), wherein
the compound (1a) obtained in the step (P0) is used in the step (P1),
H-O-Ar¹-CO-OH ... (1h)
wherein Ar¹ represents a 1,4-phenylene group, a 2,6-naphthylene group or a 4,4'-biphenylylene group, and hydrogen atoms that exist in the group represented by Ar¹ may each be independently substituted with a halogen atom, an alkyl group or an aryl group.

6. The method for producing an aromatic polyester according to Claim 5, wherein
the reaction between the compound (1h) and the carboxylic acid anhydride in the step (P0) is conducted under conditions in which a molar ratio represented by carboxylic acid anhydride / compound (1h) exceeds 1.

7. The method for producing an aromatic polyester according to Claim 6, wherein
a reaction liquid obtained following the reaction of the compound (1h) and the carboxylic acid anhydride under conditions in which the molar ratio exceeds 1 is used to conduct the melt polymerization in the step (P1).

8. The method for producing an aromatic polyester according to Claim 6 or 7, wherein the molar ratio is at least 1.05 but not more than 1.10.
